# EUROPÄISCHE PATENTSCHRIFT

(11) **EP 3 196 861 B1**
(45) Veröffentlichungstag und Bekanntmachung des Hinweises auf die Patenterteilung: **02.08.2023**
(21) Anmeldenummer: 16465502.9
(22) Anmeldetag: 19.01.2016
(51) Int. Cl.: B60W 30/09, B60W 50/14, G08G 1/16, B62D 15/02, G08G 1/056

(54) **VERFAHREN UND VORRICHTUNG ZUR UNTERSTÜTZUNG EINES FAHRSPURWECHSELS BEI EINEM FAHRZEUG**
METHOD AND DEVICE FOR SUPPORTING A LANE CHANGE IN A VEHICLE
PROCEDE ET DISPOSITIF DESTINES A ASSISTER UN CHANGEMENT DE VOIE DE CIRCULATION POUR UN VEHICULE

(43) Veröffentlichungstag der Anmeldung: 26.07.2017
(73) Patentinhaber: Continental Autonomous Mobility Germany GmbH, 85057 Ingolstadt (DE)
(72) Erfinder: TOMESCU, Victor, 307287 Mosnita Veche (RO)
(74) Vertreter: Continental Corporation

(56) Entgegenhaltungen:
- WO-A1-2014/204381
- DE-A1-102005 023 185
- DE-A1-102007 033 887
- DE-A1-102012 215 173

## Beschreibung

Die Erfindung betrifft ein Verfahren und eine Vorrichtung zur Unterstützung eines Fahrspurwechsels bei einem Fahrzeug, das sich in einer Fahrtrichtung entlang einer Fahrspur auf einer Straße bewegt.

In vielen Fahrsituationen ist es notwendig, dass ein Fahrzeug, das sich auf einer Fahrspur einer Straße bewegt, einen Fahrspurwechsel vornimmt. Bewegt sich beispielsweise ein Fahrzeug auf einer mehrspurigen Autobahn, so ist es erforderlich, dass das Fahrzeug einen Fahrspurwechsel auf eine andere Fahrspur der Autobahn vornimmt, falls sich von hinten ein anderes Fahrzeug auf der gleichen Fahrspur mit einer höheren Fahrgeschwindigkeit dem Fahrzeug nähert. Durch einen rechtzeitigen Fahrspurwechsel des vorne fahrenden Fahrzeuges wird die Wahrscheinlichkeit für eine Kollision der beiden Fahrzeuge vermindert und demzufolge die Sicherheit für alle Verkehrsteilnehmer erhöht.

Verschiedene Möglichkeiten zur Unterstützung des Fahrers bei einem Fahrspurwechsel sind aus den Druckschriften DE 10 2007 033 887 A1 und WO 2014 204 381 A1 bekannt geworden. In der Druckschrift DE 10 2005 023 185 A1 ist ferner ein Spurwechselassistent beschrieben, welcher in Abhängigkeit eines vorausfahrenden Fahrzeugs auf der eigenen Spur Empfehlungen für einen Spurwechsel ausgibt und ggf. zudem ggf. vorhandene Fahrzeuge auf einer Nachbarspur mit in die jeweilige Betrachtung einbezieht.

Aus der Druckschrift DE 10 2012 215 173 A1 ist ein Verfahren zum Durchführen eines manuellen oder automatischen Fahrspurwechsels in Abhängigkeit von einem Auffahrabstand bekannt.

Bei herkömmlichen Fahrzeugen erkennt ein Fahrer beispielsweise durch Betrachten eines Rückspiegels oder eines Seitenspiegels ein sich annäherndes Fahrzeug und kann einen entsprechenden Fahrspurwechsel vornehmen. Es kann allerdings vorkommen, dass ein Fahrer aufgrund der Verkehrssituation abgelenkt ist oder aus sonstigen Gründen die Rückspiegel seines Fahrzeuges nicht betrachtet und somit möglicherweise ein sich von hinten annäherndes schnelles Fahrzeug nicht oder zu spät bemerkt, um rechtzeitig einen Fahrspurwechsel auf eine andere Fahrspur vornehmen zu können. Der Fahrer des sich annähernden Fahrzeuges muss in diesem Falle sein Fahrzeug abbremsen, um eine Kollision mit dem vorausfahrenden Fahrzeug zu vermeiden. Durch den Bremsvorgang wird der Verkehrsfluss auf der Straße behindert, wobei es sogar zu einer Kettenreaktion von Bremsvorgängen kommen kann, die beispielsweise zu einem Verkehrsstau auf der Straße führen. Ferner kann es vorkommen, dass ein sich annäherndes Fahrzeug ob gewollt oder ungewollt den Mindestabstand unterschreitet und so die Gefahr eines Auffahrunfalles besteht.

Es ist daher eine Aufgabe der vorliegenden Erfindung, ein Verfahren und eine Vorrichtung zur Erhöhung der Fahrsicherheit im Straßenverkehr zu schaffen.

Diese Aufgabe wird erfindungsgemäß durch ein Verfahren mit den in Patentanspruch 1 angegebenen Merkmalen und durch eine Vorrichtung mit den in Patentanspruch 6 angegebenen Merkmalen gelöst.

Die Erfindung schafft demnach ein Verfahren zur Unterstützung eines Fahrspurwechsels für den Fahrer eines Fahrzeuges, welches sich auf einer Fahrspur einer Straße in Fahrrichtung bewegt, wobei das Verfahren die folgenden Schritte aufweist:
Erfassen eines weiteren Fahrzeuges, das sich dem Fahrzeug des Fahrers von hinten nähert, anhand von Sensordaten;
Prüfen mittels einer Datenverarbeitungseinheit, ob ein Wechsel des Fahrzeuges auf eine andere Fahrspur derselben Straße möglich und zulässig ist, sobald ein sich näherndes Fahrzeug erfasst worden ist; und
Informieren des Fahrers des Fahrzeuges über eine Nutzerschnittstelle mittels der Datenverarbeitungseinheit dahingehend, dass sich ein anderes Fahrzeug nähert und Abgeben von Steuersignalen zur Ansteuerung einer Lenkeinheit des Fahrzeuges, um einen automatischen Fahrspurwechsel des Fahrzeuges auszulösen, falls ein derartiger Spurwechsel auf eine andere Fahrspur derselben Straße möglich und zulässig ist. Beipielsweise wird geprüft, ob eine freie Fahrspur auf der rechten Seite in Fahrtrichtung des sich bewegenden Fahrzeuges auf der gleichen Straße existiert.

Bei einer weiteren möglichen Ausführungsform des erfindungsgemäßen Verfahrens wird geprüft, ob eine andere Fahrspur in der gleichen Fahrtrichtung des sich bewegenden Fahrzeuges existiert und falls dies der Fall ist, wird ferner geprüft, ob ein Hindernis vorhanden ist, welches einen Fahrspurwechsel des Fahrzeuges auf die betreffende andere Fahrspur der Straße verhindert.

Erfindungsgemäß wird eine Relativgeschwindigkeit zwischen einer gemessenen Fahrgeschwindigkeit des Fahrzeuges und einer gemessenen Fahrgeschwindigkeit des anderen Fahrzeuges berechnet.

Bei einer weiteren möglichen Ausführungsform des erfindungsgemäßen Verfahrens wird der Fahrer des Fahrzeuges über die berechnete Relativgeschwindigkeit zwischen dem eigenen Fahrzeug und dem sich nähernden anderen Fahrzeug mittels einer Nutzerschnittstelle informiert.

Bei einer weiteren möglichen Ausführungsform des erfindungsgemäßen Verfahrens wird ein Fahrspurwechsel des Fahrzeuges auf eine freie Fahrspur der gleichen Straße in Abhängigkeit von der berechneten Relativgeschwindigkeit zwischen dem Fahrzeug und dem sich nähernden anderen Fahrzeug vorgeschlagen oder ausgeführt.

Zudem wird erfindungsgemäß das Fahrzeug vor und/oder während des Fahrspurwechsels des Fahrzeuges auf die freie Fahrspur erfindungsgemäß beschleunigt, falls die berechnete Relativgeschwindigkeit zwischen dem Fahrzeug und dem erfassten anderen Fahrzeug, welches sich dem Fahrzeug von hinten nähert, einen vorbestimmten Schwellenwert überschreitet, um eine Kollision zwischen beiden Fahrzeugen zu verhindern.

Bei einer weiteren möglichen Ausführungsform des erfindungsgemäßen Verfahrens wird ein Warnsignal durch das Fahrzeug vor und/oder während des Fahrspurwechsels abgegeben, falls die berechnete Relativgeschwindigkeit zwischen dem Fahrzeug und dem erfassten anderen Fahrzeug, welches sich dem Fahrzeug von hinten annähert, einen vorgegebenen Schwellenwert überschreitet, um eine Kollision zwischen beiden Fahrzeugen zu verhindern.

Die Erfindung schafft ferner eine Vorrichtung zur Unterstützung eines Fahrspurwechsels mit den in Patentanspruch 6 angegebenen Merkmalen.

Weitere Ausführungsformen der erfindungsgemäßen Vorrichtung sind in den entsprechenden Unteransprüchen angegeben.

Im Weiteren werden mögliche Ausführungsformen des erfindungsgemäßen Verfahrens und der erfindungsgemäßen Vorrichtung zur Unterstützung eines Fahrspurwechsels unter Bezugnahme auf die beigefügten Figuren näher erläutert.

Es zeigen:
- Figur 1: ein Blockdiagramm einer möglichen Ausführungsform der erfindungsgemäßen Vorrichtung zur Unterstützung eines Fahrspurwechsels;
- Figur 2: ein weiteres Blockschaltbild zur Darstellung einer weiteren beispielhaften Ausführungsform einer erfindungsgemäßen Vorrichtung zur Unterstützung eines Fahrspurwechsels;
- Figur 3: ein weiteres Blockschaltbild zur Darstellung einer weiteren beispielhaften Ausführungsform der erfindungsgemäßen Vorrichtung zur Unterstützung eines Fahrspurwechsels;
- Figur 4: ein Ablaufdiagramm zur Darstellung eines Ausführungsbeispiels des erfindungsgemäßen Verfahrens zur Unterstützung eines Fahrspurwechsels;
- Figur 5: ein weiteres Ablaufdiagramm zur Darstellung eines weiteren Ausführungsbeispiels des erfindungsgemäßen Verfahrens zur Unterstützung eines Fahrspurwechsels;
- Figuren 6, 7, 8: schematische Darstellungen möglicher Fahrsituationen zur Erläuterung der Funktionsweise des erfindungsgemäßen Verfahrens und der erfindungsgemäßen Vorrichtung zur Unterstützung eines Fahrspurwechsels.

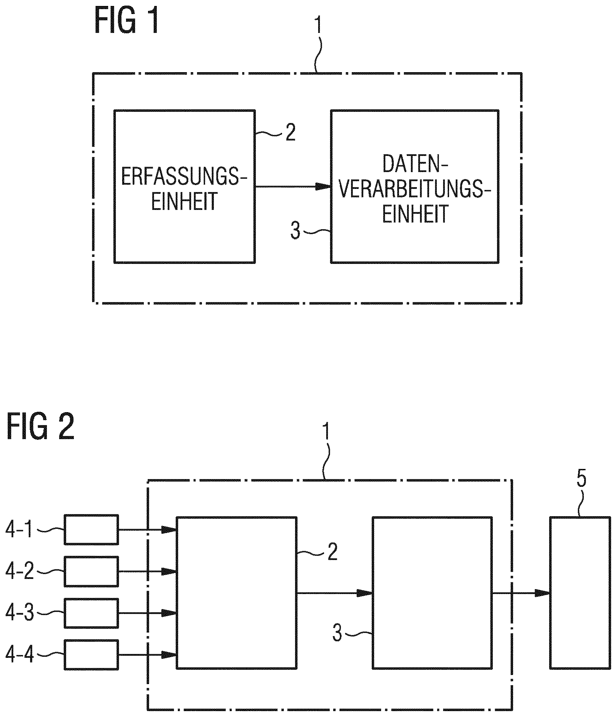

Wie man aus Figur 1 erkennen kann, weist eine erfindungsgemäße Vorrichtung 1 zur Unterstützung eines Fahrspurwechsels bei einem Fahrzeug bei dem dargestellten Ausführungsbeispiel eine Erfassungseinheit 2 und eine Datenverarbeitungseinheit 3 auf. Die Vorrichtung 1 gibt einem Fahrer eines Fahrzeuges eine Unterstützung bei einem Fahrspurwechsel seines Fahrzeuges. Dabei befindet sich das Fahrzeug auf einer Fahrspur einer Straße, beispielsweise einer mehrspurigen Autobahn. Das Fahrzeug bewegt sich in Fahrtrichtung entlang einer Fahrspur auf der betreffenden Straße. Die in Figur 1 dargestellte Vorrichtung 1 bildet einen Teil eines Fahrerassistenzsystems innerhalb eines Fahrzeuges, insbesondere eines Straßenfahrzeuges. Die Erfassungseinheit 2 erfasst mindestens ein anderes Fahrzeug, welches sich dem betreffenden Fahrzeug des Fahrers aus einer Richtung annähert. Hierzu verfügt die Erfassungseinheit 2 vorzugsweise über eine oder mehrere Sensoreinheiten, die sich an verschiedenen Seiten der Fahrzeugkarosserie des Fahrzeuges befinden. Die Erfassungseinheit 2 wertet die Sensordaten aus, um festzustellen, ob sich ein anderes Fahrzeug nähert. Das sich nähernde Fahrzeug wird durch die Erfassungseinheit 2 der Datenverarbeitungseinheit 3 der Vorrichtung 1 gemeldet.

Die Datenverarbeitungseinheit 3 weist einen oder mehrere Prozessoren auf, um die Daten, insbesondere Sensordaten, auszuwerten. Die Datenverarbeitungseinheit 3 prüft vorzugsweise in Echtzeit, ob ein Wechsel des Fahrzeuges auf eine andere Fahrspur der gleichen Straße möglich und zulässig ist, sobald ein sich annäherndes Fahrzeug durch die Erfassungseinheit 2 detektiert bzw. erfasst wird. Die Datenverarbeitungseinheit 3 informiert über eine Nutzerschnittstelle den Fahrer des Fahrzeuges über das sich annähernde andere Fahrzeug, und gibt Steuersignalen zur Ansteuerung einer Lenkeinheit des Fahrzeuges ab, um einen autonomen Fahrspurwechsel des Fahrzeuges auszulösen, falls ein derartiger Fahrspurwechsel auf eine andere Fahrspur der gleichen Straße möglich und zulässig ist, wobei eine Relativgeschwindigkeit zwischen der gemessenen Fahrgeschwindigkeit des Fahrzeuges des Fahrers und einer gemessenen Fahrgeschwindigkeit des anderen Fahrzeuges berechnet wird, wobei das Fahrzeug des Fahrers vor und/oder wahrend des Fahrspurwechsels des Fahrzeuges auf die freie Fahrspur beschleunigt wird, falls die berechnete Relativgeschwindigkeit zwischen dem Fahrzeug des Fahrers und dem erfassten anderen Fahrzeug, welches sich dem Fahrzeug des Fahrers von hinten nähert, einen vorgegebenen Schwellenwert überschreitet, und eine Kollision zwischen den beiden Fahrzeugen zu vermeiden. Bei einer möglichen Ausführungsform wird durch die Datenverarbeitungseinheit 3 geprüft, ob eine freie Fahrspur auf der rechten Seite des sich in Fahrtrichtung fortbewegenden eigenen Fahrzeuges auf der gleichen Straße vorhanden ist. Die Datenverarbeitungseinheit 3 informiert in diesem Falle den Fahrer des Fahrzeuges über eine Nutzerschnittstelle über das sich von hinten annähernde Fahrzeug und die Datenverarbeitungseinheit 3 wird automatisch bzw. autonom den Lenkvorgang auf die verfügbare freie Fahrspur vornehmen bzw. veranlassen, falls dies entsprechend den allgemeinen Verkehrsregeln und/oder entsprechend vorhandenen lokalen Verkehrszeichen zulässig ist.

Bei einer möglichen Ausführungsform prüft die Datenverarbeitungseinheit 3 zusätzlich, ob ein Hindernis vorhanden ist, welches einen Fahrspurwechsel des Fahrzeuges auf die jeweilige andere Fahrspur der Straße verhindert. Dieses Hindernis ist beispielsweise ein anderes auf der gleichen Straße befindliches Fahrzeug oder ein sonstiges Hindernis, beispielsweise ein temporär aufgestelltes Verkehrszeichen oder dergleichen. Bei einer möglichen Ausführungsform wird der Fahrer des Fahrzeuges über eine Nutzerschnittstelle über die berechnete Relativgeschwindigkeit zwischen dem eigenen Fahrzeug und dem sich annähernden anderen Fahrzeug informiert. Dabei wird der Fahrer vorzugsweise zusätzlich darüber informiert, von welcher Seite sich das andere Fahrzeug nähert. Beispielsweise wird der Fahrer des Fahrzeuges darüber informiert, dass sich ein anderes Fahrzeug mit einer Relativgeschwindigkeit von 50 km/h von hinten seinem Fahrzeug annähert. Bei einer möglichen Ausführungsform der erfindungsgemäßen Vorrichtung wird der Fahrspurwechsel des Fahrzeuges auf eine freie Fahrspur derselben Straße in Abhängigkeit von der berechneten Relativgeschwindigkeit zwischen dem eigenen Fahrzeug und dem sich nähernden anderen Fahrzeug suggeriert bzw. vorgeschlagen oder automatisch bzw. autonom ausgeführt. Bei einer möglichen Ausführungsform erfolgt der Fahrspurwechsel automatisch bzw. autonom, sofern die berechnete Relativgeschwindigkeit und der bestehende Restabstand zwischen den beiden Fahrzeugen dem Fahrer des Fahrzeuges nicht genug Zeit lässt, um einen Fahrspurwechsel manuell bzw. durch den Fahrer gelenkt vorzunehmen. Nähert sich beispielsweise ein Fahrzeug von hinten dem eigenen Fahrzeug des Fahrers mit einer derart hohen Geschwindigkeit, dass dem Fahrer nicht genügend Reaktionszeit für einen Fahrspurwechsel verbleibt, wird vorzugsweise der Fahrspurwechsel automatisch durch die Datenverarbeitungseinheit 3 eingeleitet, indem sie die Lenkeinheit des Fahrzeuges entsprechend ansteuert.

Bei einer weiteren nicht beanspruchten Ausführungsform der erfindungsgemäßen Vorrichtung erfolgt der Fahrspurwechsel autonom, sobald der Fahrer eine autonome Fahrspurwechselfunktion über eine Eingabeeinheit aktiviert hat. Bei dieser Ausführungsform wird der Fahrer zusätzlich bei Vornahme eines Fahrspurwechsels akustisch oder optisch über den Fahrspurwechsel informiert. Der Fahrer hat die Möglichkeit, die autonome Fahrspurwechselfunktionalität zu deaktivieren und wird dann seitens der Vorrichtung 1 über eine Nutzerschnittstelle zur manuellen Vornahme des Fahrspurwechsels aufgefordert, sobald dies die Verkehrssituation erforderlich macht und ein entsprechender Fahrspurwechsel möglich ist. Der Fahrer eines Fahrzeuges wird beispielsweise zur Vornahme eines Fahrspurwechsels aufgefordert, falls die folgenden Bedingungen erfüllt sind: Es wird ein anderes Fahrzeug detektiert bzw. erkannt, welches sich dem Fahrzeug mit einer Relativgeschwindigkeit, beispielsweise von hinten, annähert.

Es besteht eine weitere Fahrspur, insbesondere auf der rechten Seite der Straße.

Es besteht auf dieser Fahrspur kein Hindernis, welches einen Fahrspurwechsel verhindert.

Die Empfehlung zum Fahrspurwechsel kann beispielsweise auf dem Instrumentenboard des Fahrzeuges dem Fahrer angezeigt werden. Weiterhin kann der Fahrer des Fahrzeuges seitens der Vorrichtung 1 Warnmeldungen in Abhängigkeit von der Dringlichkeit des vorzunehmenden Fahrspurwechsels erhalten. Diese Warnmeldungen werden vorzugsweise automatisch in Abhängigkeit von der Relativgeschwindigkeit des anderen Fahrzeuges und/oder der Richtung, aus der sich das andere Fahrzeug annähert, erzeugt. Nähert sich beispielsweise das andere Fahrzeug mit einer hohen Relativgeschwindigkeit von hinten, kann ein erstes akustisches Warnsignal über die Nutzerschnittstelle an den Fahrer abgegeben werden, während ein anderes akustisches Warnsignal an den Fahrer abgegeben wird, falls sich das andere Fahrzeug von vorne mit der gleichen Relativgeschwindigkeit annähert. Das akustische und/oder optische Warnsignal kann in seiner Amplitude und Frequenz von der ermittelten Relativgeschwindigkeit und/oder der Annäherungsrichtung abhängen, sodass der Fahrer unmittelbar die Dringlichkeit eines vorzunehmenden Fahrspurwechsels erkennen kann.

Figur 2 zeigt ein Blockschaltbild zur Darstellung eines weiteren Ausführungsbeispiels der erfindungsgemäßen Vorrichtung zur Unterstützung eines Fahrspurwechsels. Bei dem in Figur 2 dargestellten Ausführungsbeispiel ist die Erfassungseinheit 2 an verschiedene Sensoreinheiten 4-1, 4-2, 4-3, 4-4 angeschlossen, die sich an verschiedenen Seiten der Fahrzeugkarosserie des betreffenden Fahrzeuges befinden. Vorzugsweise befinden sich die verschiedenen Sensoreinheiten 4-1, 4-2, 4-3, 4-4 an der Vorderseite, an der linken und rechten Seite sowie auf der Rückseite der Fahrzeugkarosserie. Bei den Sensoren 4-i handelt es sich beispielsweise um Radarsensoren eines Radarsystems des Fahrzeuges. Durch das

Anbringen von Radarsensoren an verschiedenen Seiten der Fahrzeugkarosserie ist es möglich, die Fahrzeugumgebung rundherum, d.h. mit einem Blickwinkel von 360°, zu erfassen. Das Radarsystem sendet Radarwellen aus, die von dem sich annähernden Objekt bzw. Fahrzeug reflektiert werden und durch die Sensoreinheiten 4-i erfasst werden. Die Radarsensordaten bzw. Radarsensorsignale werden der Erfassungseinheit 2 zur Auswertung zugeführt. Die Erfassungseinheit 2 wertet die Radarsensordaten aus und kann mit deren Hilfe ein sich dem Fahrzeug annäherndes anderes Fahrzeug erfassen. Ferner kann die Erfassungseinheit 2 durch Auswertung der Radarsignale bzw. Radarsensordaten, die sie von den verschiedenen Radarsensoreinheiten 4-i erhält, die Relativgeschwindigkeit des sich annähernden Fahrzeuges ermitteln. Die Erfassungseinheit 2 meldet das sich annähernde Fahrzeug der Datenverarbeitungseinheit 3, die daraufhin prüft, ob ein Wechsel des Fahrzeuges auf eine andere Fahrspur der Straße möglich und zulässig ist. Bei der in Figur 2 dargestellten Ausführungsform wird der Fahrer über eine Nutzerschnittstelle 5 über das sich nähernde Fahrzeug informiert, um so einen manuellen oder autonomen Fahrspurwechsel des Fahrzeuges herbeizuführen bzw. zu triggern, falls ein derartiger Fahrspurwechsel auf eine andere Fahrspur der gleichen Straße möglich und zulässig ist.

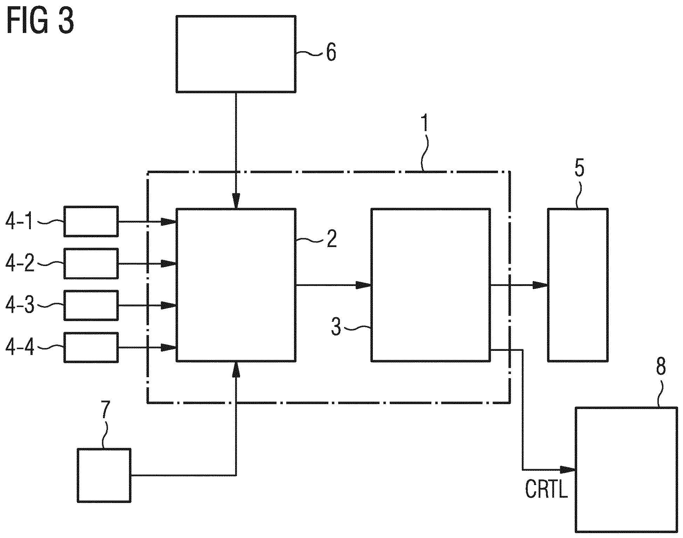

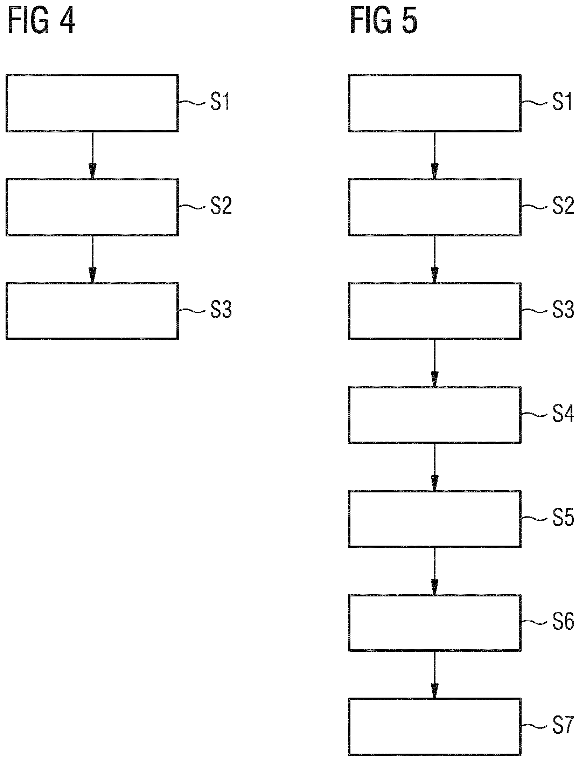

Figur 3 zeigt ein Blockschaltbild eines weiteren Ausführungsbeispiels der erfindungsgemäßen Vorrichtung zur Unterstützung eines Fahrspurwechsels. Bei dem in Figur 3 dargestellten Ausführungsbeispiel erhält die Erfassungseinheit 2 von einer weiteren Einheit 6 Informationen hinsichtlich Hindernisse, welche einen möglichen Fahrspurwechsel auf eine freie Fahrspur verhindern können. Bei diesen Hindernissen kann es sich beispielsweise um andere Fahrzeuge auf der Straße handeln. Das Vorhandensein von Hindernissen auf anderen Fahrspuren kann mithilfe der gleichen oder einer anderen Sensorik ermittelt werden. Beispielsweise können Hindernisse auf anderen Fahrspuren auch mithilfe von Fahrzeugkameras oder sonstigen optischen Sensoren erkannt werden. Handelt es sich bei den Hindernissen um andere Fahrzeuge auf der gleichen Straße, wird eine Relativgeschwindigkeit zwischen dem Fahrzeug und den bewegenden Hindernissen durch die Datenverarbeitungseinheit 3 der Vorrichtung 1 berechnet. Bei einer möglichen Ausführungsform wird die eigene Fahrgeschwindigkeit des Fahrzeuges über einen Geschwindigkeitssensor 7 ermittelt und der Erfassungseinheit 2 der Vorrichtung 1 zugeführt, wie in Figur 3 dargestellt. Die Datenverarbeitungseinheit 3 informiert den Fahrer des Fahrzeuges über die Annäherung des anderen Fahrzeuges, beispielsweise mittels der Nutzerschnittstelle 5, wie in Figur 3 dargestellt. Die Datenverarbeitungseinheit 3 gibt Steuersignale zur Ansteuerung einer Lenkeinheit 8 des Fahrzeuges ab, um einen automatischen bzw. autonomen Fahrspurwechsel durchzuführen bzw. zu unterstützen. Figur 4 zeigt ein Ablaufdiagramm zur Darstellung eines Ausführungsbeispiels eines Verfahrens zur Unterstützung eines Fahrspurwechsels bei einem Fahrzeug. Das Fahrzeug bewegt sich dabei in Fahrtrichtung entlang einer Fahrspur auf einer Straße.

In einem ersten Schritt S1 wird ein sich dem Fahrzeug annäherndes anderes Fahrzeug detektiert bzw. erfasst. Dies geschieht beispielsweise mit der in Figur 1 dargestellten Erfassungseinheit 2. Sobald ein sich näherndes Fahrzeug im Schritt S1 erkannt worden ist, wird im Schritt S2 geprüft, ob ein Wechsel des Fahrzeuges auf eine andere Fahrspur der gleichen Straße möglich und zulässig ist. Ist dies der Fall, wird der Fahrer des Fahrzeuges im Schritt S3 über das sich nähernde andere Fahrzeug informiert, um einen autonomen Fahrspurwechsel des Fahrzeuges auszulösen, falls der Fahrspurwechsel möglich und zulässig ist.

Figur 5 zeigt ein Ablaufdiagramm zur Darstellung eines weiteren Ausführungsbeispiels des Verfahrens zur Unterstützung eines Fahrspurwechsels. Dabei sind die ersten drei Schritte S1, S2, S3 identisch zu den Schritten S1 bis S3, wie sie in Figur 4 dargestellt sind. Bei dem in Figur 5 dargestellten Ausführungsbeispiel erfolgt in einem weiteren Schritt S4 eine Bestimmung der Seite der Fahrzeugkarosserie des Fahrzeuges, der sich das andere Fahrzeug annähert. Beispielsweise kann die Erfassungseinheit 2 erfassen bzw. detektieren, ob sich das andere Fahrzeug von vorne, von links, von rechts oder von hinten dem Fahrzeug annähert. Hier wird in einem weiteren Schritt S5 wird die Relativgeschwindigkeit zwischen der gemessenen Fahrgeschwindigkeit des Fahrzeuges und einer gemessenen Fahrgeschwindigkeit des anderen Fahrzeuges berechnet bzw. ermittelt. Erfindungsgemäß wird das Fahrzeug zusätzlich vor oder während des Fahrspurwechsels auf die freie Fahrspur beschleunigt, falls die im Schritt S5 berechnete Relativgeschwindigkeit zwischen dem eigenen Fahrzeug und einem sich von hinten nähernden anderen Fahrzeug einen bestimmten Schwellenwert überschreitet, um eine Kollision der beiden Fahrzeuge zu verhindern. Schließlich kann in einem Schritt S7 ein Warnsignal vor und/oder während des Fahrspurwechsels abgegeben werden, falls die im Schritt S5 berechnete Relativgeschwindigkeit zwischen dem Fahrzeug und dem erfassten anderen Fahrzeug, welches sich von hinten annähert, einen bestimmten Schwellenwert überschreitet. Beispielsweise kann das Fahrzeug während des Fahrspurwechsels an seiner Rückseite ein Warnblinksignal abgeben, falls sich ein anderes Fahrzeug von hinten mit einer derart hohen Fahrgeschwindigkeit annähert, sodass ein Fahrspurwechsel des vorausfahrenden Fahrzeuges zur Vermeidung einer Kollision zwingend erforderlich ist und autonom gesteuert vorgenommen wird.

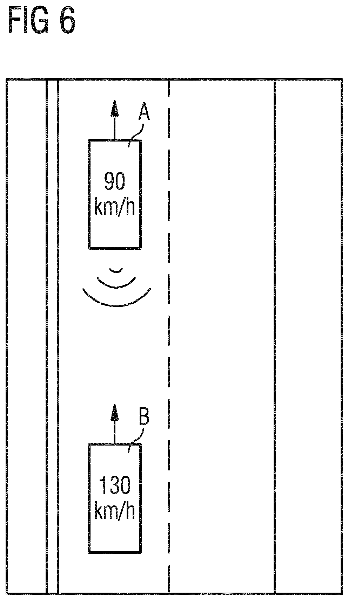

Figuren 6, 7, 8 zeigen verschiedene Verkehrssituationen zur Erläuterung der Funktionsweise des erfindungsgemäßen Verfahrens und der erfindungsgemäßen Vorrichtung zur Unterstützung eines Fahrspurwechsels.

Bei der in Figur 6 dargestellten Verkehrssituation bewegen sich zwei Fahrzeuge A, B auf der Überholspur einer zweispurigen Autobahn in dieselbe Fahrtrichtung. Dabei nähert sich das Fahrzeug B aufgrund seiner höheren Fahrgeschwindigkeit dem vorausfahrenden Fahrzeug A an. Bei dem in Figur 6 dargestellten Beispiel fährt das vorausfahrende Fahrzeug A auf der linken Fahrspur mit einer Geschwindigkeit von 90 km/h, während sich das Fahrzeug B von hinten mit einer Fahrgeschwindigkeit von 130 km/h nähert. Die Relativgeschwindigkeit zwischen den beiden Fahrzeugen A, B beträgt demnach 40 km/h. Ein Sensor der Erfassungseinheit 2 innerhalb des vorausfahrenden Fahrzeuges A erkennt das sich von hinten nähernde Fahrzeug B und überprüft, ob ein Fahrspurwechsel auf einer andere Fahrspur der Straße möglich und zulässig ist. Bei der in Figur 6 dargestellten Verkehrssituation ist die rechte Fahrspur frei, sodass ein Fahrspurwechsel des Fahrzeuges A von der linken Überholspur auf die rechte Spur der zweispurigen Autobahn ohne Weiteres möglich ist. Daher wird bei der in Figur 6 dargestellten Verkehrssituation der Fahrspurwechsel entweder durch den Fahrer des Fahrzeuges A manuell vorgenommen, nachdem er über das sich nähernde Fahrzeug B informiert worden ist, oder der Fahrspurwechsel wird durch das Assistenzsystem automatisch vorgenommen, wobei die Vornahme des Fahrspurwechsels dem Fahrer vorzugsweise über eine Fahrerschnittstelle signalisiert wird. Erfindungsgemäß wird die Relativgeschwindigkeit zwischen den beiden Fahrzeugen A, B berechnet und der Fahrspurwechsel kann dann in Abhängigkeit der berechneten Relativgeschwindigkeit erfolgen. Je höher die Relativgeschwindigkeit von den beiden Fahrzeugen A, B bei der in Figur 6 dargestellten Verkehrssituation ist, desto möglicher ist der Fahrspurwechsel und desto schneller wird der Fahrspurwechsel seitens des Assistenzsystems vorgeschlagen bzw. vorgenommen. Ist bei der in Figur 6 dargestellten Verkehrssituation die Relativgeschwindigkeit zwischen den beiden Fahrzeugen A, B höher als ein bestimmter einstellbarer Schwellenwert, sodass eine Kollisionsgefahr zwischen beiden Fahrzeugen A, B besteht, wird das vorausfahrende Fahrzeug A vor und/oder während des Fahrspurwechsels beschleunigt, um die Wahrscheinlichkeit einer Kollision zu senken.

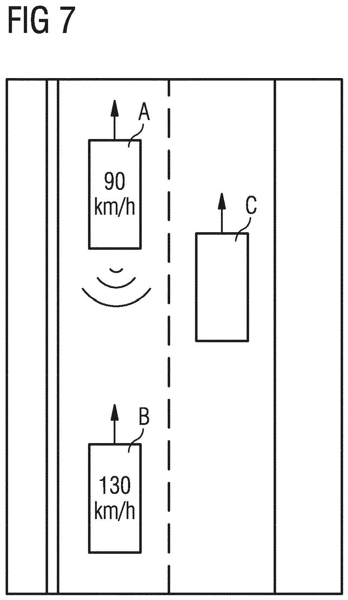

Bei der in Figur 7 dargestellten Verkehrssituation befindet sich auf der rechten Fahrspur der zweispurigen Autobahn ein drittes Fahrzeug C, welches eine in etwa gleich große Geschwindigkeit wie das vorausfahrende Fahrzeug A besitzt. Bei der in Figur 7 dargestellten Verkehrssituation stellt das Fahrzeug C auf der rechten Fahrspur ein bewegliches Hindernis dar, welches einen Fahrspurwechsel des vorausfahrenden Fahrzeuges A auf die rechte Fahrspur verhindert. Bei der in Figur 7 dargestellten Fahrsituation schlägt das Assistenzsystem keinen Fahrspurwechsel auf die rechte Fahrspur vor, um eine Kollision mit dem Fahrzeug C auszuschließen.

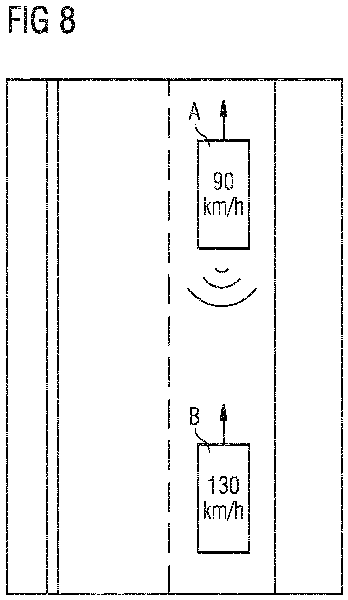

Bei der in Figur 8 dargestellten Verkehrssituation befinden sich beide Fahrzeuge A, B auf der rechten Fahrspur einer zweispurigen Autobahn. Bei der in Figur 8 dargestellten Verkehrssituation ist ein Ausweichen des Fahrzeuges A durch Fahrspurwechsel nicht möglich, da sich das Fahrzeug A bereits auf der äußersten rechten Fahrspur befindet. Bei der in Figur 8 dargestellten Verkehrssituation ist somit ein Fahrspurwechsel aufgrund der allgemeinen Verkehrsregeln nicht zulässig.

Bei dem erfindungsgemäßen Verfahren und bei der erfindungsgemäßen Vorrichtung zur Unterstützung eines Fahrspurwechsels wird einerseits die Verkehrssicherheit erhöht und andererseits der Verkehrsfluss in einem Straßensystem erhöht. Darüber hinaus wird der Fahrer im laufenden Verkehr entlastet. Bei den Fahrzeugen kann es sich um beliebige Fahrzeuge, insbesondere Straßenfahrzeuge, handeln, beispielsweise Pkw, Lkw oder Motorräder. Weitere nicht beanspruchte Ausführungsformen des erfindungsgemäßen Verfahrens und der erfindungsgemäßen Vorrichtung sind möglich. Bei einer möglichen nicht beanspruchten Ausführungsform wird automatisch bei einem Fahrspurwechsel der entsprechende Blinker aktiviert, um den Fahrspurwechsel anderen Verkehrsteilnehmern anzuzeigen. Bei einer weiteren Ausführungsform besteht zwischen den verschiedenen Fahrzeugen bzw. Verkehrsteilnehmern eine drahtlose Kommunikationsverbindung, beispielsweise über eine Funkschnittstelle. Bei einer möglichen nicht beanspruchten Ausführungsform des erfindungsgemäßen Verfahrens und der erfindungsgemäßen Vorrichtung zur Unterstützung des Fahrspurwechsels wird der Fahrspurwechsel anderen Verkehrsteilnehmern über die Kommunikationsschnittstelle zusätzlich mitgeteilt. Nähert sich beispielsweise bei der in Figur 6 dargestellten Verkehrssituation der Verkehrsteilnehmer des Fahrzeuges B mit einer relativ hohen Geschwindigkeit dem vorausfahrenden Fahrzeug A, kann dessen Assistenzsystem den Fahrspurwechsel auf die rechte Fahrspur dem Fahrer des Fahrzeuges A vorschlagen bzw. autonom vornehmen und gleichzeitig den Fahrspurwechsel dem von hinten sich nähernden Fahrzeug B über die Kommunikationsschnittstelle melden. Vorzugsweise kann das Assistenzsystem des Fahrzeuges A gleichzeitig einen rechten Blinker setzen, um den Fahrspurwechsel auf die rechte Fahrspur anzuzeigen. Der gesetzte Blinker des vorausfahrenden Fahrzeuges A kann bei einer möglichen nicht beanspruchten Ausführungsform durch das Fahrerassistenzsystem des sich nähernden Fahrzeuges B erkannt werden. Darüber hinaus kann bei einer möglichen nicht beanspruchten Ausführungsform zusätzlich der vom Fahrzeug A über die Kommunikationsschnittstelle gemeldete Fahrspurwechsel seitens des Fahrerassistenzsystems des Fahrzeuges B detektiert werden. Bei dieser Verkehrssituation besteht für den Fahrer des Fahrzeuges B die Möglichkeit, auf einen Bremsvorgang zu verzichten bzw. sein Fahrzeug B sogar zu beschleunigen, da das Fahrzeug B von einem Fahrspurwechsel des vorausfahrenden Fahrzeuges A ausgehen kann. Umgekehrt kann das Fahrerassistenzsystem des vorausfahrenden Fahrzeuges A beispielsweise bei der in Figur 7 dargestellten Verkehrssituation über die Kommunikationsschnittstelle dem auffahrenden Fahrzeug B mitteilen, dass ein Fahrspurwechsel auf die rechte Fahrspur derzeit nicht möglich ist (aufgrund des daneben fahrenden Fahrzeuges C). In dieser Verkehrssituation ist der Fahrer des Fahrzeuges B gezwungen abzubremsen, um einen Auffahrunfall bzw. eine Kollision zu verhindern.

Der Einsatz des erfindungsgemäßen Verfahrens und der erfindungsgemäßen Vorrichtung ist auf die in den Figuren 6, 7, 8 dargestellten Verkehrssituationen beschränkt.

### BEZUGSZEICHEN

1 Vorrichtung zur Unterstützung eines Fahrspurwechsels
2 Erfassungseinheit
3 Datenverarbeitungseinheit
4 Sensoreinheit
5 Nutzerschnittstelle
6 Hindernismeldeeinheit
7 Geschwindigkeitssensor
8 Lenkeinheit

## Patentansprüche

1. Verfahren zur Unterstützung eines Fahrspurwechsels für den Fahrer eines Fahrzeuges, das sich auf einer Fahrspur einer Straße in Fahrtrichtung bewegt,
wobei das Verfahren die folgenden Schritte aufweist:
Erfassen eines weiteren Fahrzeuges, welches sich dem Fahrzeug des Fahrers von hinten nähert, anhand von Sensordaten;
Prüfen mittels einer Datenverarbeitungseinheit (3), ob ein Wechsel des Fahrzeuges auf eine andere Fahrspur derselben Straße möglich und zulässig ist, sobald ein sich näherndes Fahrzeug erfasst worden ist; und
Informieren des Fahrers des Fahrzeuges über eine Nutzerschnittstelle mittels der Datenverarbeitungseinheit (3) dahingehend, dass sich ein anderes Fahrzeug nähert und Abgeben von Steuersignalen zur Ansteuerung einer Lenkeinheit (8) des Fahrzeuges, um einen automatischen Fahrspurwechsel des Fahrzeuges auszulösen, falls ein derartiger Spurwechsel auf eine andere Fahrspur der gleichen Straße möglich und zulässig ist,
wobei eine Relativgeschwindigkeit zwischen der gemessenen Fahrgeschwindigkeit des Fahrzeuges des Fahrers und einer gemessenen Fahrgeschwindigkeit des anderen Fahrzeuges berechnet wird,
**dadurch gekennzeichnet, dass** das Fahrzeug des Fahrers vor und/oder während des Fahrspurwechsels des Fahrzeuges auf die freie Fahrspur beschleunigt wird, falls die berechnete Relativgeschwindigkeit zwischen dem Fahrzeug des Fahrers und dem erfassten anderen Fahrzeug, welches sich dem Fahrzeug des Fahrers von hinten nähert, einen vorgegebenen Schwellenwert überschreitet, um eine Kollision zwischen den beiden Fahrzeugen zu vermeiden.

2. Verfahren nach Anspruch 1, wobei geprüft wird, ob eine andere Fahrspur in derselben Fahrtrichtung des sich bewegenden Fahrzeuges existiert und, falls dies der Fall ist, ob es ein Hindernis gibt, welches einen Fahrspurwechsel des Fahrzeuges auf die jeweilige Fahrspur der Straße verhindert.

3. Verfahren nach Anspruch 1, wobei der Fahrer des Fahrzeuges über die berechnete Relativgeschwindigkeit zwischen dem Fahrzeug des Fahrers und der Geschwindigkeit des sich annähernden Fahrzeuges informiert wird.

4. Verfahren nach einem der vorangehenden Ansprüche 1 bis 3, wobei ein Fahrspurwechsel des Fahrzeuges des Fahrers auf die freie Fahrspur der gleichen Straße in Abhängigkeit von der berechneten Relativgeschwindigkeit zwischen dem Fahrzeug des Fahrers und dem sich annähernden anderen Fahrzeug ausgeführt wird.

5. Verfahren nach einem der vorangehenden Ansprüche 1 bis 4, wobei ein Warnsignal vor oder während des Fahrspurwechsels durch das Fahrzeug des Fahrers ausgelöst wird, falls die berechnete Relativgeschwindigkeit zwischen dem Fahrzeug des Fahrers und dem erfassten anderen Fahrzeug, welches sich dem Fahrzeug des Fahrers von hinten nähert, einen vorgegebenen Schwellenwert überschreitet, um eine Kollision zwischen den beiden Fahrzeugen zu vermeiden.

6. Vorrichtung (1) zur Unterstützung eines Fahrspurwechsels bei einem Fahrzeug, das sich in Fahrtrichtung entlang einer Fahrspur einer Straße bewegt mit:
einer Erfassungseinheit (2), welche dazu ausgestaltet ist, mindestens ein weiteres sich von hinten näherndes Fahrzeugzu erfassen; und mit einer Datenverarbeitungseinheit (3), welche dazu ausgestaltet ist, zu prüfen, ob ein Wechsel des Fahrzeuges auf eine andere Fahrspur auf der gleichen Straße möglich und zulässig ist, sobald ein sich näherndes Fahrzeug durch die Erfassungseinheit (2) erfasst wird und den Fahrer des Fahrzeuges über eine Nutzerschnittstelle über das sich nähernde andere Fahrzeug zu informieren und Steuersignale zur Ansteuerung einer Lenkeinheit (8) des Fahrzeuges abzugeben, um einen automatischen Fahrspurwechsel des Fahrzeuges auszulösen, falls ein solcher Fahrspurwechsel auf eine andere Fahrspur der gleichen Straße möglich und zulässig ist,
wobei die Datenverarbeitungseinheit (3) zusätzlich dazu ausgestaltet ist, eine Relativgeschwindigkeit zwischen einer gemessenen Fahrgeschwindigkeit des Fahrzeuges und einer gemessenen Fahrgeschwindigkeit des anderen Fahrzeuges zu berechnen, und
wobei die Datenverarbeitungseinheit (3) dazu ausgestaltet ist, das Fahrzeug des Fahrers vor und/oder während des Fahrspurwechsels des Fahrzeuges auf die freie Fahrspur zu beschleunigen, falls die berechnete Relativgeschwindigkeit zwischen dem Fahrzeug des Fahrers und dem erfassten anderen Fahrzeug, welches sich dem Fahrzeug des Fahrers von hinten nähert, einen vorgegebenen Schwellenwert überschreitet, um eine Kollision zwischen den beiden Fahrzeugen zu vermeiden.

7. Vorrichtung (1) nach Anspruch 6, wobei die Datenverarbeitungseinheit (3) dazu ausgestaltet ist, zu prüfen, ob eine Fahrspur in derselben Fahrtrichtung des sich bewegenden Fahrzeuges existiert und falls dies der Fall ist, zusätzlich zu prüfen, ob ein Hindernis einen Fahrspurwechsel des Fahrzeuges auf die jeweilige Fahrspur der Straße verhindert.

8. Vorrichtung (1) nach einem der vorangehenden Ansprüche 6 bis 7, wobei die Datenverarbeitungseinheit (3) dazu ausgestaltet ist, die berechnete Relativgeschwindigkeit dem Fahrer des Fahrzeuges mitzuteilen.

## Claims

1. Method for supporting a lane change for the driver of a vehicle which is moving in a direction of travel on a lane of a roadway,
wherein the method has the following steps:
by using sensor data, detecting a further vehicle which is approaching the vehicle of the driver from behind;
by means of a data processing unit (3), checking whether a change of the vehicle to another lane of the same roadway is possible and permissible as soon as an approaching vehicle has been detected; and
by means of the data processing unit (3), informing the driver of the vehicle via a user interface to the effect that another vehicle is approaching, and outputting control signals to activate a steering unit (8) of the vehicle in order to trigger an automatic lane change of the vehicle if such a lane change to another lane of the same roadway is possible and permissible,
wherein a relative speed between the measured speed of travel of the vehicle of the driver and a measured speed of travel of the other vehicle is calculated,
**characterized in that** the vehicle of the driver is accelerated before and/or during the lane change of the vehicle to the free lane if the calculated relative speed between the vehicle of the driver and the detected other vehicle which is approaching the vehicle of the driver from behind exceeds a predefined threshold value, in order to avoid a collision between the two vehicles.

2. Method according to Claim 1, wherein a check is made as to whether another lane exists in the same direction of travel of the moving vehicle and, if this is the case, whether there is an obstacle which prevents a lane change of the vehicle to the respective lane of the roadway.

3. Method according to Claim 1, wherein the driver of the vehicle is informed about the calculated relative speed between the vehicle of the driver and the speed of the approaching vehicle.

4. Method according to one of the preceding Claims 1 to 3, wherein a lane change of the vehicle of the driver to the free lane of the same roadway is carried out depending on the calculated relative speed between the vehicle of the driver and the approaching other vehicle.

5. Method according to one of the preceding Claims 1 to 4, wherein a warning signal is triggered before or during the lane change by the vehicle of the driver if the calculated relative speed between the vehicle of the driver and the detected other vehicle which is approaching the vehicle of the driver from behind exceeds a predefined threshold value, in order to avoid a collision between the two vehicles.

6. Device (1) for supporting a lane change in a vehicle which is moving in a direction of travel along a lane of a roadway, having:
a detection unit (2), which is configured to detect at least one further vehicle approaching from behind; and having a data processing unit (3) which is configured to check whether a change of the vehicle to another lane on the same roadway is possible and permissible as soon as an approaching vehicle is detected by the detection unit (2), and to inform the driver of the vehicle via a user interface about the approaching other vehicle and output control signals to activate a steering unit (8) of the vehicle in order to trigger an automatic lane change of the vehicle if such a lane change to another lane of the same roadway is possible and permissible,
wherein the data processing unit (3) is additionally configured to calculate a relative speed between a measured speed of travel of the vehicle and a measured speed of travel of the other vehicle, and
wherein the data processing unit (3) is designed to accelerate the vehicle of the driver before and/or during the lane change of the vehicle to the free lane if the calculated relative speed between the vehicle of the driver and the detected other vehicle which is approaching the vehicle of the driver from behind exceeds a predefined threshold value, in order to avoid a collision between the two vehicles.

7. Device (1) according to Claim 6, wherein the data processing unit (3) is configured to check whether a lane exists in the same direction of travel of the moving vehicle and, if this is the case, additionally to check whether an obstacle prevents a lane change of the vehicle to the respective lane of the roadway.

8. Device (1) according to one of the preceding Claims 6 to 7, wherein the data processing unit (3) is configured to communicate the calculated relative speed to the driver of the vehicle.

## Revendications

1. Procédé permettant d'assister un changement de voie de circulation pour le conducteur d'un véhicule qui se déplace dans le sens de la marche sur une voie de circulation d'une route,
dans lequel le procédé présente les étapes suivantes consistant à :
détecter à l'aide de données de capteur un autre véhicule qui s'approche par derrière du véhicule du conducteur ;
vérifier au moyen d'une unité de traitement de données (3) si un passage du véhicule sur une autre voie de circulation de la même route est possible et autorisé dès qu'un véhicule en approche a été détecté ; et
informer le conducteur du véhicule par l'intermédiaire d'une interface utilisateur au moyen de l'unité de traitement de données (3) du fait qu'un autre véhicule s'approche, et sortir des signaux de commande pour piloter une unité de direction (8) du véhicule afin de déclencher un changement de voie de circulation automatique du véhicule si un tel changement de voie vers une autre voie de circulation de la même route est possible et autorisé,
dans lequel une vitesse relative entre la vitesse de déplacement mesurée du véhicule du conducteur et une vitesse de déplacement mesurée de l'autre véhicule est calculée,
**caractérisé en ce que** le véhicule du conducteur est accéléré avant et/ou pendant le changement de voie de circulation du véhicule vers la voie de circulation libre si la vitesse relative calculée entre le véhicule du conducteur et l'autre véhicule détecté qui s'approche du véhicule du conducteur par derrière dépasse une valeur seuil prédéfinie, afin d'éviter une collision entre les deux véhicules.

2. Procédé selon la revendication 1, dans lequel il est vérifié s'il existe une autre voie de circulation dans le même sens de la marche que le véhicule en mouvement, et si c'est le cas, s'il existe un obstacle qui empêche un changement de voie de circulation du véhicule vers la voie de circulation respective de la route.

3. Procédé selon la revendication 1, dans lequel le conducteur du véhicule est informé de la vitesse relative calculée entre le véhicule du conducteur et la vitesse du véhicule en approche.

4. Procédé selon l'une quelconque des revendications précédentes 1 à 3, dans lequel un changement de voie de circulation du véhicule du conducteur vers la voie de circulation libre de la même route est effectué en fonction de la vitesse relative calculée entre le véhicule du conducteur et l'autre véhicule en approche.

5. Procédé selon l'une quelconque des revendications précédentes 1 à 4, dans lequel un signal d'avertissement est déclenché par le véhicule du conducteur avant ou pendant le changement de voie de circulation si la vitesse relative calculée entre le véhicule du conducteur et l'autre véhicule détecté qui s'approche du véhicule du conducteur par derrière dépasse une valeur seuil prédéfinie, afin d'éviter une collision entre les deux véhicules.

6. Dispositif (1) permettant d'assister un changement de voie de circulation pour un véhicule qui se déplace dans le sens de la marche le long d'une voie de circulation d'une route, comprenant :
une unité de détection (2) qui est conçue pour détecter au moins un autre véhicule s'approchant par derrière ; et comprenant
une unité de traitement de données (3) qui est conçue pour vérifier si un passage du véhicule sur une autre voie de circulation sur la même route est possible et autorisé dès qu'un véhicule en approche est détecté par l'unité de détection (2), et pour informer le conducteur du véhicule par l'intermédiaire d'une interface utilisateur concernant l'autre véhicule en approche, et pour sortir des signaux de commande pour piloter une unité de direction (8) du véhicule afin de déclencher un changement de voie de circulation automatique du véhicule si un tel changement de voie de circulation vers une autre voie de circulation de la même route est possible et autorisé,
dans lequel l'unité de traitement de données (3) est en outre conçue pour calculer une vitesse relative entre une vitesse de déplacement mesurée du véhicule et une vitesse de déplacement mesurée de l'autre véhicule, et
dans lequel l'unité de traitement de données (3) est conçue pour accélérer le véhicule du conducteur avant et/ou pendant le changement de voie de circulation du véhicule vers la voie de circulation libre si la vitesse relative calculée entre le véhicule du conducteur et l'autre véhicule détecté qui s'approche du véhicule du conducteur par derrière dépasse une valeur seuil prédéfinie, afin d'éviter une collision entre les deux véhicules.

7. Dispositif (1) selon la revendication 6, dans lequel l'unité de traitement de données (3) est conçue pour vérifier s'il existe une voie de circulation dans le même sens de la marche que le véhicule en mouvement, et si c'est le cas, pour vérifier en outre s'il existe un obstacle qui empêche un changement de voie de circulation du véhicule vers la voie de circulation respective de la route.

8. Dispositif (1) selon l'une quelconque des revendications précédentes 6 à 7, dans lequel l'unité de traitement de données (3) est configurée pour communiquer la vitesse relative calculée au conducteur du véhicule.
